# EUROPEAN PATENT SPECIFICATION

(11) **EP 3 977 234 B1**
(45) Date of publication and mention of the grant of the patent: **05.03.2025**
(21) Application number: 20730362.9
(22) Date of filing: 14.05.2020
(51) Int. Cl.: G06F 1/28, G06F 1/30

(54) **CLOUD-MANAGED ALLOCATION OF A NETWORK'S POWER USE TO CONTROL RUNTIME ON BACKUP BATTERY**
CLOUD-VERWALTETE ZUTEILUNG DES STROMVERBRAUCHS EINES NETZWERKS ZUR STEUERUNG DER LAUFZEIT EINER BACKUP-BATTERIE
ATTRIBUTION GÉRÉE EN NUAGE DE L'UTILISATION D'ÉNERGIE D'UN RÉSEAU POUR COMMANDER L'EXÉCUTION SUR UNE BATTERIE DE SECOURS

(30) Priority: 30.05.2019 US 201916427159
(43) Date of publication of application: 06.04.2022
(73) Proprietor: Cisco Technology, Inc., San Jose, California 95134-1706 (US)
(72) Inventor: DUPREE, Andrew John, San Francisco, California 94110 (US); KAWAMOTO, Nicholas James Kaoru, Novato, California 94945 (US); GABA, Dhruv, San Francisco, California 94107 (US)
(74) Representative: Noble, Nicholas
(86) International application number: PCT/US2020/032861
(87) International publication number: WO 2020/242775

(56) References cited:
- EP-A1- 3 082 013
- US-A- 5 761 084
- US-A1- 2007 118 772
- US-A1- 2019 107 877
- US-B1- 6 643 566
- US-B1- 8 209 413

## Description

### CROSS-REFERENCE TO RELATED APPLICATION

This application claims the benefit of, and priority to, U.S. Non-Provisional Patent Application No. 16/427,159, filed on May 30, 2019, entitled "CLOUD-MANAGED ALLOCATION OF A NETWORK'S POWER USE TO CONTROL RUNTIME ON BACKUP BATTERY."

### TECHNICAL FIELD

The present technology pertains to controlling backup power consumption by network devices in a network environment, and in particular to controlling backup power consumption by network devices on a per-device basis according to a backup power consumption plan.

### BACKGROUND

In the event of a power outage, networks usually run on backup power/battery power. However, the network does not know that it is running on backup power, and continues to consume power normally. As a result, backup power is used up faster than is necessary. There therefore exist needs for systems and methods for effectively controlling power consumption in a network environment when a network is operating on backup power, e.g. from an uninterruptible power supply (UPS).

In order to conserve battery power, current systems control power delivery from the UPS side. Specifically, a UPS can shut off power to devices coupled to the UPS through different ports of the UPS. More specifically, the UPS can conserve battery power by shutting off a port and therefore refraining from delivering power to all network devices coupled to the port. This port-by-port technique for conserving power is problematic as often times numerous network devices draw power through a single port. In particular network devices that are both critical and not critical to network environment operation can draw power through the same port. In turn, shutting off the port can lead to critical network devices failing to receive backup power. There therefore exist needs for systems and methods for controlling network device backup power consumption from the network device side and on a per-device basis.

US5761084 is directed to a redundant power supply unit that provides backup power to network devices. The redundant power supply unit will supply power to the network devices in the case that their local internal power supplies fail. Furthermore, if there is a power outage from the utility company, the redundant power supply will supply power to the network devices from a internal battery pack. When the internal battery pack is engaged, the redundant power supply uses programmed control logic that controls how the power from internal battery pack will be allocated. Specifically, since the power from the batteries is limited, it can be used to power some network devices for a certain amount of time and other network devices for a longer amount of time. Furthermore, the power from the batteries can be allocated depending on the voltage level of the battery thus, when the battery voltage drops below a certain threshold the power supply may disconnect power to some units and maintain power to others.

US6643566 is directed to a system for generating, delivering and distributing electrical power to network elements over a data communication network infrastructure within a building, campus or enterprise.

US8209413 is directed to a management workstation that has an interface for receiving notifications of data-center facilities infrastructure events. A manager determines emergency power settings for managed computing resources in response to the notifications. The settings are then communicated to the resources.

EP3082013 is directed to systems and methods for monitoring an AC power to a computing system, generating a power failure signal when the AC power is determined abnormal, and cause one or more components of the computing system to be switched to a low power mode or shut down to reduce power consumption of the computing system.

### OVERVIEW

An invention is set out in the claims.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1A illustrates an example cloud computing architecture;
FIG. 1B illustrates an example fog computing architecture;
FIG. 2A illustrates a diagram of an example network environment, such as a data center;
FIG. 2B illustrates another example of a network environment;
FIG. 3 illustrates an example wireless communication network;
FIG. 4 illustrates an example network environment for controlling backup power consumption by network devices within the network environment;
FIG. 5 illustrates a flowchart for an example method of controlling backup power consumption by network devices in a network environment;
FIG. 6 illustrates an example computing system; and
FIG. 7 illustrates an example network device.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### Overview

According to the method of claim 1 of the present invention the method includes identifying a backup power consumption plan for controlling power consumption by network devices of a network environment from a UPS of the network environment. Further, an interruption of power delivery over a main power delivery channel to the network devices during operation of the network devices is detected. In response, power consumption by the network devices from the UPS is selectively controlled on a per-device basis according to the backup power consumption plan. Specifically, power consumption by the network devices from the UPS is controlled on a per-device basis according to the backup power consumption plan in response to detecting the interruption of power delivery over the main power delivery channel to the network devices. The method further comprises controlling power consumption by the network devices from the UPS by controlling power delivery through ports of one or more switches and/or routers coupled between the network devices and the UPS on a per-port basis.

In various embodiments, the backup power consumption plan is defined by an administrator associated with the network environment. In specific embodiments, the backup power consumption plan defines one or more specific backup power up-times for one or more network devices of the network devices. In certain embodiments, the backup power consumption plan defines one or more critical network devices of the network devices to continue to consume power from the UPS while the UPS still has power. In specific embodiments, the backup power consumption plan defines one or more non-critical network devices of the network devices to power down and refrain from consuming power from the UPS.

In various embodiments, the backup power consumption plan can define one or more dynamic power network devices of the network devices to operate in a low power mode and consume less power from the UPS than when the one or more dynamic power network devices are operating normally in the network environment. In specific embodiments, the one or more dynamic power network devices and characteristics of operation of the low power mode are defined by a network administrator associated with the network environment. In certain embodiments, the one or more dynamic power network devices and characteristics of operation of the low power mode are automatically defined based on operation of the one or more dynamic power network devices within the network environment to provide network service access.

In various embodiments, power analytics for the network devices in operation within the network environment to provide network service access are gathered. Further, the power analytics can be presented to an administrator associated with the network environment for defining, at least in part by the administrator, the backup power consumption plan. In specific embodiments, the power analytics are gathered for the network devices during operation of the network devices within the network environment to provide network service access while receiving power over the main power delivery channel.

In various embodiments, the power consumption of the network devices is controlled according to the backup power consumption plan locally through the UPS. In specific embodiments, the power consumption of the network devices is remotely controlled according to the backup power consumption plan through a remote power management system.

In various embodiments, the main power delivery channel is an AC inline power channel and the interruption of power delivery over the main power delivery channel is detected by the UPS in response to the UPS failing to receive AC inline power through the AC inline power channel or the main power delivery channel failing to provide enough power to power the network devices during operation of the network devices.

In various embodiments, selectively controlling power consumption by the network devices from the UPS further comprises sending corresponding backup power consumption instructions generated according to the backup power consumption plan, and wherein the network devices are configured to implement the corresponding backup power consumption instructions to operate according to the backup power consumption plan

A system can include one or more processors and at least one computer-readable storage medium storing instructions which, when executed by the one or more processors, cause the one or more processors to identify a backup power consumption plan defined by an administrator for controlling power consumption by network devices of a network environment from a UPS of the network environment. The instructions can also cause the one or more processors to detect an interruption of power delivery over a main power delivery channel to the network devices during operation of the network devices. Further, the instructions can cause the one or more processors to selectively control power consumption by the network devices from the UPS on a per-device basis according to the backup power consumption plan in response to detecting the interruption of power delivery over the main power delivery channel to the network devices.

A non-transitory computer-readable storage medium having stored therein instructions which, when executed by a processor, cause the processor to identify a backup power consumption plan for controlling power consumption by network devices of a network environment from a UPS of the network environment. The backup power consumption plan can define one or more specific backup power up-times for one or more network devices of the network devices. The instructions can also cause the processor to detect an interruption of power delivery over a main power delivery channel to the network devices during operation of the network devices. Further, the instructions can cause the processor to selectively control power consumption by the network devices from the UPS on a per-device basis according to the backup power consumption plan in response to detecting the interruption of power delivery over the main power delivery channel to the network devices.

### Description

The disclosed technology addresses the need in the art for mechanisms and techniques for effectively controlling power consumption in a network environment when a network is operating on backup power, e.g. from a UPS. Further, the disclosed technology address the need in the art for mechanisms and techniques for controlling network device backup power consumption from the network device side and on a per-network device basis. The present technology involves system, methods, and computer-readable media for controlling backup power consumption by network devices in a network environment. Further, the present technology involves systems, methods, and computer-readable media for controlling backup power consumption by network devices on a per-device basis according to a backup power consumption plan.

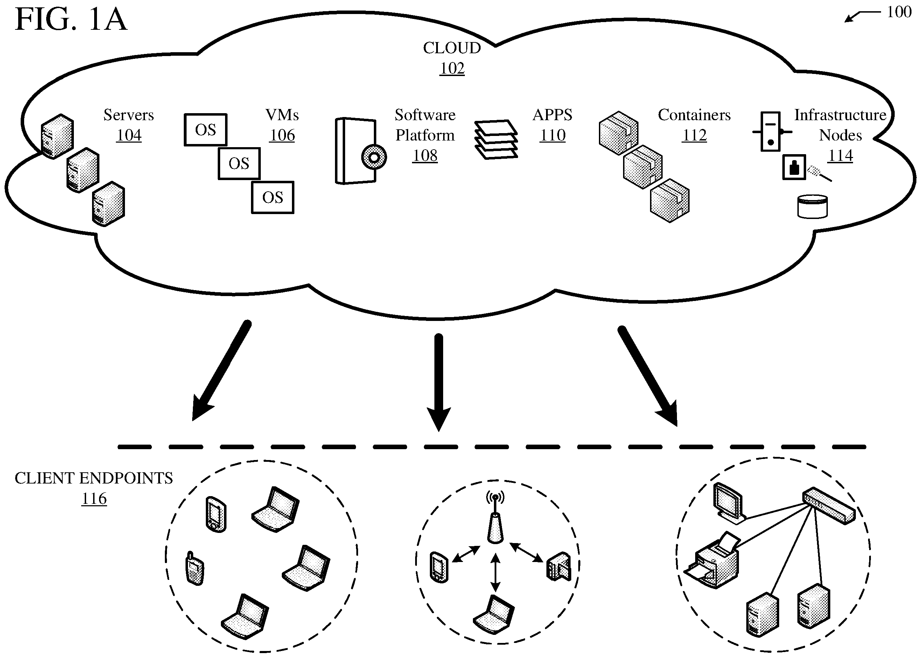

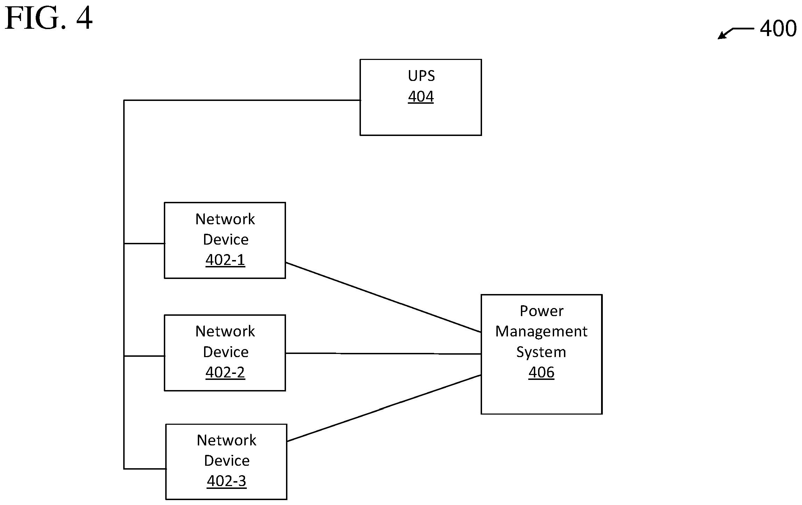

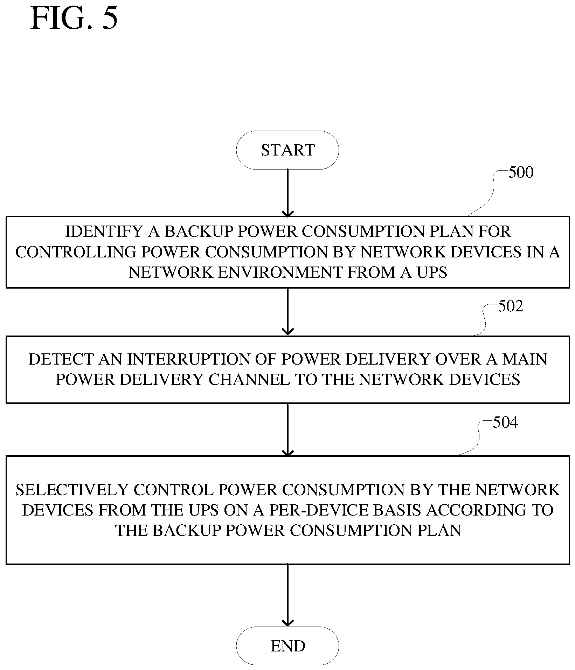

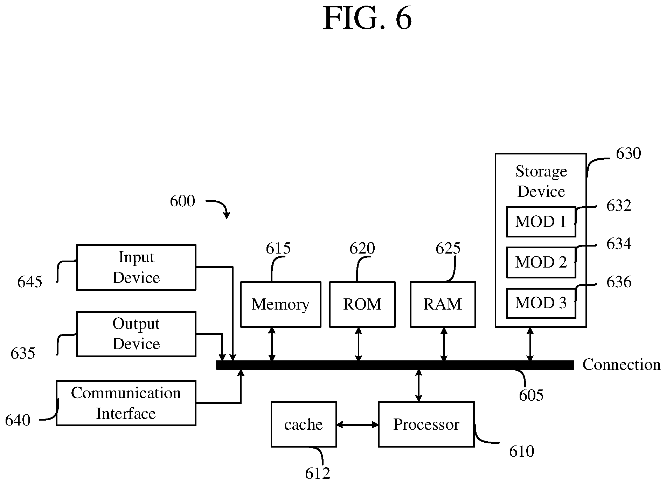

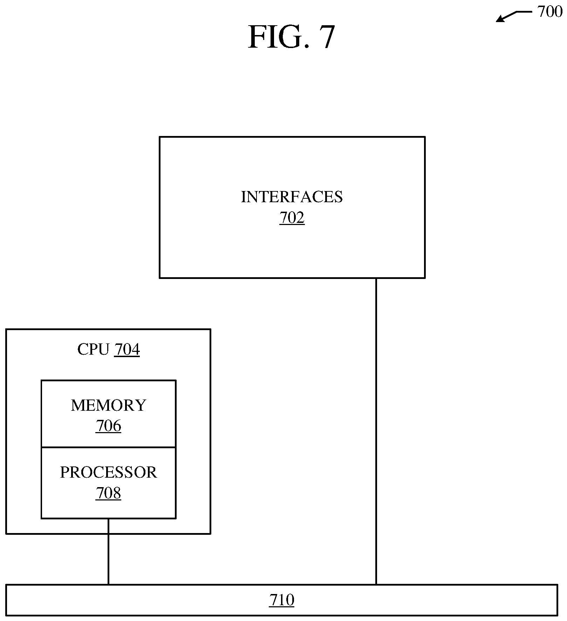

A description of network environments and architectures for network data access and services, as illustrated in FIGs. 1A, 1B, 2A, 2B, and 3 is first disclosed herein. A discussion of systems, methods, and computer-readable media for controlling backup power consumption in a network environment, as shown in FIGs. 4 and 5, will then follow. The discussion then concludes with a brief description of example devices, as illustrated in FIGs. 6 and 7. These variations shall be described herein as the various embodiments are set forth. The disclosure now turns to FIG. 1A.

FIG. 1A illustrates a diagram of an example cloud computing architecture 100. The architecture can include a cloud 102. The cloud 102 can include one or more private clouds, public clouds, and/or hybrid clouds. Moreover, the cloud 102 can include cloud elements 104-114. The cloud elements 104-114 can include, for example, servers 104, virtual machines (VMs) 106, one or more software platforms 108, applications or services 110, software containers 112, and infrastructure nodes 114. The infrastructure nodes 114 can include various types of nodes, such as compute nodes, storage nodes, network nodes, management systems, etc.

The cloud 102 can provide various cloud computing services via the cloud elements 104-114, such as software as a service (SaaS) (e.g., collaboration services, email services, enterprise resource planning services, content services, communication services, etc.), infrastructure as a service (IaaS) (e.g., security services, networking services, systems management services, etc.), platform as a service (PaaS) (e.g., web services, streaming services, application development services, etc.), and other types of services such as desktop as a service (DaaS), information technology management as a service (ITaaS), managed software as a service (MSaaS), mobile backend as a service (MBaaS), etc.

The client endpoints 116 can connect with the cloud 102 to obtain one or more specific services from the cloud 102. The client endpoints 116 can communicate with elements 104-114 via one or more public networks (e.g., Internet), private networks, and/or hybrid networks (e.g., virtual private network). The client endpoints 116 can include any device with networking capabilities, such as a laptop computer, a tablet computer, a server, a desktop computer, a smartphone, a network device (e.g., an access point, a router, a switch, etc.), a smart television, a smart car, a sensor, a GPS device, a game system, a smart wearable object (e.g., smartwatch, etc.), a consumer object (e.g., Internet refrigerator, smart lighting system, etc.), a city or transportation system (e.g., traffic control, toll collection system, etc.), an internet of things (IoT) device, a camera, a network printer, a transportation system (e.g., airplane, train, motorcycle, boat, etc.), or any smart or connected object (e.g., smart home, smart building, smart retail, smart glasses, etc.), and so forth.

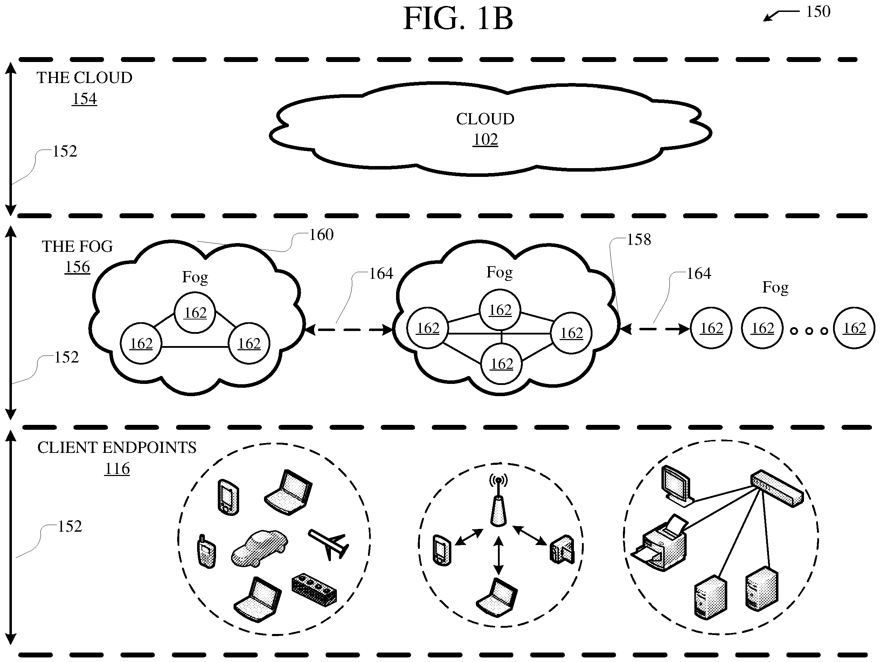

FIG. 1B illustrates a diagram of an example fog computing architecture 150. The fog computing architecture can be used to form part of a TCP connection or otherwise be accessed through the TCP connection. Specifically, the fog computing architecture can include an initiator or a receiver of a TCP connection and be utilized by the initiator or the receiver to transmit and/or receive data through the TCP connection. The fog computing architecture 150 can include the cloud layer 154, which includes the cloud 102 and any other cloud system or environment, and the fog layer 156, which includes fog nodes 162. The client endpoints 116 can communicate with the cloud layer 154 and/or the fog layer 156. The architecture 150 can include one or more communication links 152 between the cloud layer 154, the fog layer 156, and the client endpoints 116. Communications can flow up to the cloud layer 154 and/or down to the client endpoints 116.

The fog layer 156 or "the fog" provides the computation, storage and networking capabilities of traditional cloud networks, but closer to the endpoints. The fog can thus extend the cloud 102 to be closer to the client endpoints 116. The fog nodes 162 can be the physical implementation of fog networks. Moreover, the fog nodes 162 can provide local or regional services and/or connectivity to the client endpoints 116. As a result, traffic and/or data can be offloaded from the cloud 102 to the fog layer 156 (e.g., via fog nodes 162). The fog layer 156 can thus provide faster services and/or connectivity to the client endpoints 116, with lower latency, as well as other advantages such as security benefits from keeping the data inside the local or regional network(s).

The fog nodes 162 can include any networked computing devices, such as servers, switches, routers, controllers, cameras, access points, gateways, etc. Moreover, the fog nodes 162 can be deployed anywhere with a network connection, such as a factory floor, a power pole, alongside a railway track, in a vehicle, on an oil rig, in an airport, on an aircraft, in a shopping center, in a hospital, in a park, in a parking garage, in a library, etc.

In some configurations, one or more fog nodes 162 can be deployed within fog instances 158, 160. The fog instances 158, 158 can be local or regional clouds or networks. For example, the fog instances 156, 158 can be a regional cloud or data center, a local area network, a network of fog nodes 162, etc. In some configurations, one or more fog nodes 162 can be deployed within a network, or as standalone or individual nodes, for example. Moreover, one or more of the fog nodes 162 can be interconnected with each other via links 164 in various topologies, including star, ring, mesh or hierarchical arrangements, for example.

In some cases, one or more fog nodes 162 can be mobile fog nodes. The mobile fog nodes can move to different geographic locations, logical locations or networks, and/or fog instances while maintaining connectivity with the cloud layer 154 and/or the endpoints 116. For example, a particular fog node can be placed in a vehicle, such as an aircraft or train, which can travel from one geographic location and/or logical location to a different geographic location and/or logical location. In this example, the particular fog node may connect to a particular physical and/or logical connection point with the cloud 154 while located at the starting location and switch to a different physical and/or logical connection point with the cloud 154 while located at the destination location. The particular fog node can thus move within particular clouds and/or fog instances and, therefore, serve endpoints from different locations at different times.

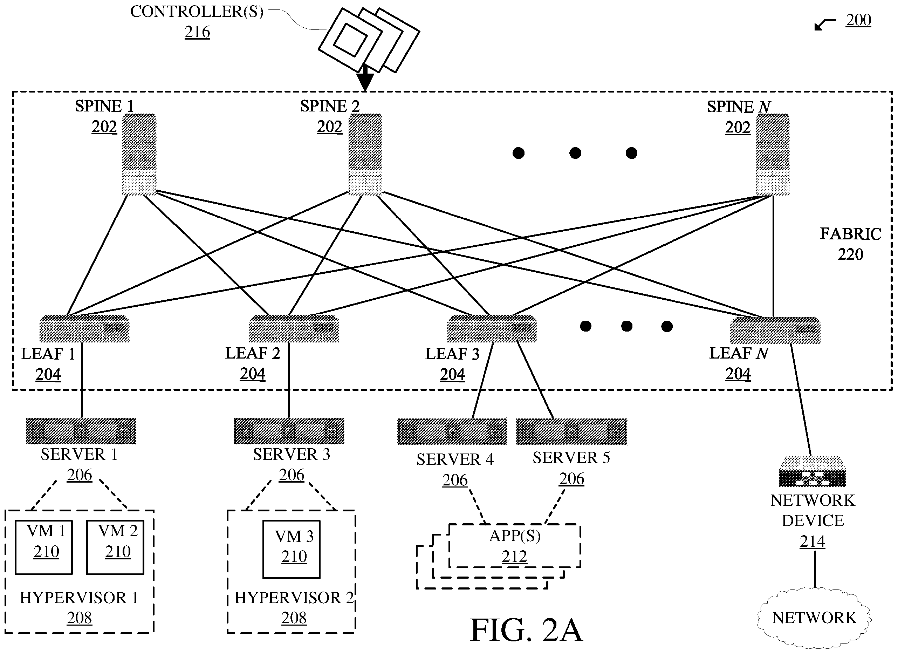

FIG. 2A illustrates a diagram of an example Network Environment 200, such as a data center. In some cases, the Network Environment 200 can include a data center, which can support and/or host the cloud 102. The Network Environment 200 can include a Fabric 220 which can represent the physical layer or infrastructure (e.g., underlay) of the Network Environment 200. Fabric 220 can include Spines 202 (e.g., spine routers or switches) and Leafs 204 (e.g., leaf routers or switches) which can be interconnected for routing or switching traffic in the Fabric 220. Spines 202 can interconnect Leafs 204 in the Fabric 220, and Leafs 204 can connect the Fabric 220 to an overlay or logical portion of the Network Environment 200, which can include application services, servers, virtual machines, containers, endpoints, etc. Thus, network connectivity in the Fabric 220 can flow from Spines 202 to Leafs 204, and vice versa. The interconnections between Leafs 204 and Spines 202 can be redundant (e.g., multiple interconnections) to avoid a failure in routing. In some embodiments, Leafs 204 and Spines 202 can be fully connected, such that any given Leaf is connected to each of the Spines 202, and any given Spine is connected to each of the Leafs 204. Leafs 204 can be, for example, switches, aggregation switches, gateways, ingress and/or egress switches, provider edge devices, and/or any other type of routing or switching device.

Leafs 204 can be responsible for routing and/or bridging tenant or customer packets and applying network policies or rules. Network policies and rules can be driven by one or more Controllers 216, and/or implemented or enforced by one or more devices, such as Leafs 204. Leafs 204 can connect other elements to the Fabric 220. For example, Leafs 204 can connect Servers 206, Hypervisors 208, Virtual Machines (VMs) 210, Applications 212, Network Device 214, etc., with Fabric 220. Such elements can reside in one or more logical or virtual layers or networks, such as an overlay network. In some cases, Leafs 204 can encapsulate and decapsulate packets to and from such elements (e.g., Servers 206) in order to enable communications throughout Network Environment 200 and Fabric 220. Leafs 204 can also provide any other devices, services, tenants, or workloads with access to Fabric 220. In some cases, Servers 206 connected to Leafs 204 can similarly encapsulate and decapsulate packets to and from Leafs 204. For example, Servers 206 can include one or more virtual switches or routers or tunnel endpoints for tunneling packets between an overlay or logical layer hosted by, or connected to, Servers 206 and an underlay layer represented by Fabric 220 and accessed via Leafs 204.

Applications 212 can include software applications, services, containers, appliances, functions, service chains, etc. For example, Applications 212 can include a firewall, a database, a CDN server, an IDS/IPS, a deep packet inspection service, a message router, a virtual switch, etc. An application from Applications 212 can be distributed, chained, or hosted by multiple endpoints (e.g., Servers 206, VMs 210, etc.), or may run or execute entirely from a single endpoint.

VMs 210 can be virtual machines hosted by Hypervisors 208 or virtual machine managers running on Servers 206. VMs 210 can include workloads running on a guest operating system on a respective server. Hypervisors 208 can provide a layer of software, firmware, and/or hardware that creates, manages, and/or runs the VMs 210. Hypervisors 208 can allow VMs 210 to share hardware resources on Servers 206, and the hardware resources on Servers 206 to appear as multiple, separate hardware platforms. Moreover, Hypervisors 208 on Servers 206 can host one or more VMs 210.

In some cases, VMs 210 and/or Hypervisors 208 can be migrated to other Servers 206. Servers 206 can similarly be migrated to other locations in Network Environment 200. For example, a server connected to a specific leaf can be changed to connect to a different or additional leaf. Such configuration or deployment changes can involve modifications to settings, configurations and policies that are applied to the resources being migrated as well as other network components.

In some cases, one or more Servers 206, Hypervisors 208, and/or VMs 210 can represent or reside in a tenant or customer space. Tenant space can include workloads, services, applications, devices, networks, and/or resources that are associated with one or more clients or subscribers. Accordingly, traffic in Network Environment 200 can be routed based on specific tenant policies, spaces, agreements, configurations, etc. Moreover, addressing can vary between one or more tenants. In some configurations, tenant spaces can be divided into logical segments and/or networks and separated from logical segments and/or networks associated with other tenants. Addressing, policy, security and configuration information between tenants can be managed by Controllers 216, Servers 206, Leafs 204, etc.

Configurations in Network Environment 200 can be implemented at a logical level, a hardware level (e.g., physical), and/or both. For example, configurations can be implemented at a logical and/or hardware level based on endpoint or resource attributes, such as endpoint types and/or application groups or profiles, through a software-defined network (SDN) framework (e.g., Application-Centric Infrastructure (ACI) or VMWARE NSX). To illustrate, one or more administrators can define configurations at a logical level (e.g., application or software level) through Controllers 216, which can implement or propagate such configurations through Network Environment 200. In some examples, Controllers 216 can be Application Policy Infrastructure Controllers (APICs) in an ACI framework. In other examples, Controllers 216 can be one or more management components for associated with other SDN solutions, such as NSX Managers.

Such configurations can define rules, policies, priorities, protocols, attributes, objects, etc., for routing and/or classifying traffic in Network Environment 200. For example, such configurations can define attributes and objects for classifying and processing traffic based on Endpoint Groups (EPGs), Security Groups (SGs), VM types, bridge domains (BDs), virtual routing and forwarding instances (VRFs), tenants, priorities, firewall rules, etc. Other example network objects and configurations are further described below. Traffic policies and rules can be enforced based on tags, attributes, or other characteristics of the traffic, such as protocols associated with the traffic, EPGs associated with the traffic, SGs associated with the traffic, network address information associated with the traffic, etc. Such policies and rules can be enforced by one or more elements in Network Environment 200, such as Leafs 204, Servers 206, Hypervisors 208, Controllers 216, etc. As previously explained, Network Environment 200 can be configured according to one or more particular software-defined network (SDN) solutions, such as CISCO ACI or VMWARE NSX. These example SDN solutions are briefly described below.

ACI can provide an application-centric or policy-based solution through scalable distributed enforcement. ACI supports integration of physical and virtual environments under a declarative configuration model for networks, servers, services, security, requirements, etc. For example, the ACI framework implements EPGs, which can include a collection of endpoints or applications that share common configuration requirements, such as security, QoS, services, etc. Endpoints can be virtual/logical or physical devices, such as VMs, containers, hosts, or physical servers that are connected to Network Environment 200. Endpoints can have one or more attributes such as a VM name, guest OS name, a security tag, application profile, etc. Application configurations can be applied between EPGs, instead of endpoints directly, in the form of contracts. Leafs 204 can classify incoming traffic into different EPGs. The classification can be based on, for example, a network segment identifier such as a VLAN ID, VXLAN Network Identifier (VNID), NVGRE Virtual Subnet Identifier (VSID), MAC address, IP address, etc.

In some cases, classification in the ACI infrastructure can be implemented by Application Virtual Switches (AVS), which can run on a host, such as a server or switch. For example, an AVS can classify traffic based on specified attributes, and tag packets of different attribute EPGs with different identifiers, such as network segment identifiers (e.g., VLAN ID). Finally, Leafs 204 can tie packets with their attribute EPGs based on their identifiers and enforce policies, which can be implemented and/or managed by one or more Controllers 216. Leaf 204 can classify to which EPG the traffic from a host belongs and enforce policies accordingly.

Another example SDN solution is based on VMWARE NSX. With VMWARE NSX, hosts can run a distributed firewall (DFW) which can classify and process traffic. Consider a case where three types of VMs, namely, application, database and web VMs, are put into a single layer-2 network segment. Traffic protection can be provided within the network segment based on the VM type. For example, HTTP traffic can be allowed among web VMs, and disallowed between a web VM and an application or database VM. To classify traffic and implement policies, VMWARE NSX can implement security groups, which can be used to group the specific VMs (e.g., web VMs, application VMs, database VMs). DFW rules can be configured to implement policies for the specific security groups. To illustrate, in the context of the previous example, DFW rules can be configured to block HTTP traffic between web, application, and database security groups.

Returning now to FIG. 2A, Network Environment 200 can deploy different hosts via Leafs 204, Servers 206, Hypervisors 208, VMs 210, Applications 212, and Controllers 216, such as VMWARE ESXi hosts, WINDOWS HYPER-V hosts, bare metal physical hosts, etc. Network Environment 200 may interoperate with a variety of Hypervisors 208, Servers 206 (e.g., physical and/or virtual servers), SDN orchestration platforms, etc. Network Environment 200 may implement a declarative model to allow its integration with application design and holistic network policy.

Controllers 216 can provide centralized access to fabric information, application configuration, resource configuration, application-level configuration modeling for a software-defined network (SDN) infrastructure, integration with management systems or servers, etc. Controllers 216 can form a control plane that interfaces with an application plane via northbound APIs and a data plane via southbound APIs.

As previously noted, Controllers 216 can define and manage application-level model(s) for configurations in Network Environment 200. In some cases, application or device configurations can also be managed and/or defined by other components in the network. For example, a hypervisor or virtual appliance, such as a VM or container, can run a server or management tool to manage software and services in Network Environment 200, including configurations and settings for virtual appliances.

As illustrated above, Network Environment 200 can include one or more different types of SDN solutions, hosts, etc. For the sake of clarity and explanation purposes, various examples in the disclosure will be described with reference to an ACI framework, and Controllers 216 may be interchangeably referenced as controllers, APICs, or APIC controllers. However, it should be noted that the technologies and concepts herein are not limited to ACI solutions and may be implemented in other architectures and scenarios, including other SDN solutions as well as other types of networks which may not deploy an SDN solution.

Further, as referenced herein, the term "hosts" can refer to Servers 206 (e.g., physical or logical), Hypervisors 208, VMs 210, containers (e.g., Applications 212), etc., and can run or include any type of server or application solution. Non-limiting examples of "hosts" can include virtual switches or routers, such as distributed virtual switches (DVS), application virtual switches (AVS), vector packet processing (VPP) switches; VCENTER and NSX MANAGERS; bare metal physical hosts; HYPER-V hosts; VMs; DOCKER Containers; etc.

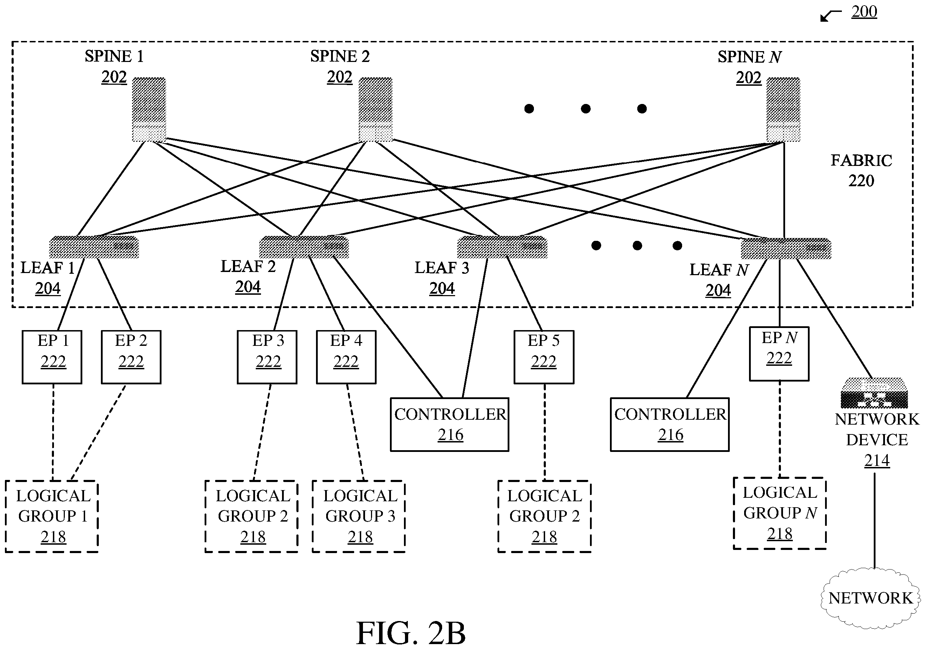

FIG. 2B illustrates another example of Network Environment 200. In this example, Network Environment 200 includes Endpoints 222 connected to Leafs 204 in Fabric 220. Endpoints 222 can be physical and/or logical or virtual entities, such as servers, clients, VMs, hypervisors, software containers, applications, resources, network devices, workloads, etc. For example, an Endpoint 222 can be an object that represents a physical device (e.g., server, client, switch, etc.), an application (e.g., web application, database application, etc.), a logical or virtual resource (e.g., a virtual switch, a virtual service appliance, a virtualized network function (VNF), a VM, a service chain, etc.), a container running a software resource (e.g., an application, an appliance, a VNF, a service chain, etc.), storage, a workload or workload engine, etc. Endpoints 122 can have an address (e.g., an identity), a location (e.g., host, network segment, virtual routing and forwarding (VRF) instance, domain, etc.), one or more attributes (e.g., name, type, version, patch level, OS name, OS type, etc.), a tag (e.g., security tag), a profile, etc.

Endpoints 222 can be associated with respective Logical Groups 218. Logical Groups 218 can be logical entities containing endpoints (physical and/or logical or virtual) grouped together according to one or more attributes, such as endpoint type (e.g., VM type, workload type, application type, etc.), one or more requirements (e.g., policy requirements, security requirements, QoS requirements, customer requirements, resource requirements, etc.), a resource name (e.g., VM name, application name, etc.), a profile, platform or operating system (OS) characteristics (e.g., OS type or name including guest and/or host OS, etc.), an associated network or tenant, one or more policies, a tag, etc. For example, a logical group can be an object representing a collection of endpoints grouped together. To illustrate, Logical Group 1 can contain client endpoints, Logical Group 2 can contain web server endpoints, Logical Group 3 can contain application server endpoints, Logical Group N can contain database server endpoints, etc. In some examples, Logical Groups 218 are EPGs in an ACI environment and/or other logical groups (e.g., SGs) in another SDN environment.

Traffic to and/or from Endpoints 222 can be classified, processed, managed, etc., based Logical Groups 218. For example, Logical Groups 218 can be used to classify traffic to or from Endpoints 222, apply policies to traffic to or from Endpoints 222, define relationships between Endpoints 222, define roles of Endpoints 222 (e.g., whether an endpoint consumes or provides a service, etc.), apply rules to traffic to or from Endpoints 222, apply filters or access control lists (ACLs) to traffic to or from Endpoints 222, define communication paths for traffic to or from Endpoints 222, enforce requirements associated with Endpoints 222, implement security and other configurations associated with Endpoints 222, etc.

In an ACI environment, Logical Groups 218 can be EPGs used to define contracts in the ACI. Contracts can include rules specifying what and how communications between EPGs take place. For example, a contract can define what provides a service, what consumes a service, and what policy objects are related to that consumption relationship. A contract can include a policy that defines the communication path and all related elements of a communication or relationship between endpoints or EPGs. For example, a Web EPG can provide a service that a Client EPG consumes, and that consumption can be subject to a filter (ACL) and a service graph that includes one or more services, such as firewall inspection services and server load balancing.

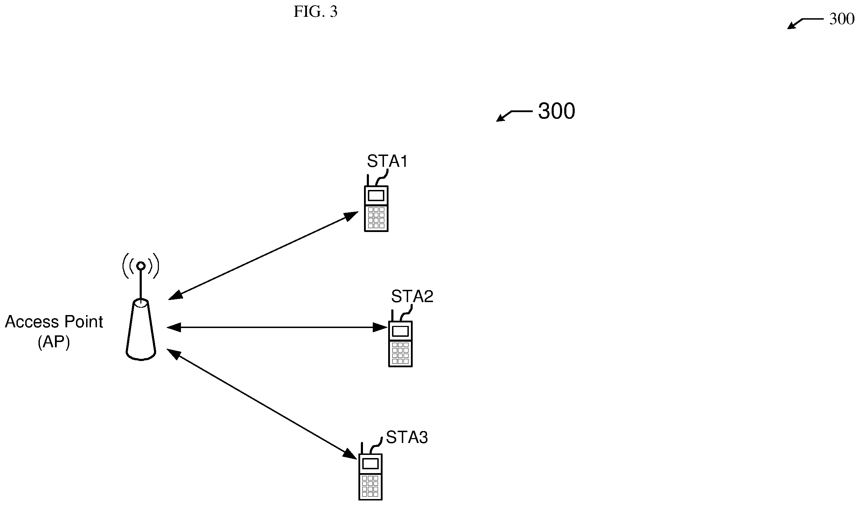

FIG. 3 illustrates an example wireless communication network 300 in which some aspects of the technology can be implemented. Specifically, the wireless communication network 300 can form, at least in part, a TCP connection and include an initiator and/or receiver in a TCP connection. Correspondingly, the wireless communication network 300 can be used to transmit data through the TCP connection.

FIG. 3 illustrates an Access Point (AP), configured for wireless communication with multiple receivers or client devices (e.g., STA1, STA2, and STA3). It is understood that additional (or fewer) STAs and/or APs could be implemented in network 300, without departing from the scope of the technology.

The AP may have access or interface to a Distribution System (DS) or another type of wired/wireless network that may carry traffic in and out of a BSS (not illustrated). Thus traffic to STAs can originate from outside the BSS, and arrive through the AP for delivery to the STAs. Conversely, traffic originating from STAs to destinations outside the BSS can be sent to the AP to be delivered to the respective destinations. Traffic between STAs within the BSS can be sent through the AP where the source STA may send traffic to the AP and the AP may deliver the traffic to the destination STA. The traffic between STAs within a BSS may be peer-to-peer traffic.

Using the IEEE 802.11 infrastructure mode of operation, the AP can transmit on a fixed channel, for example that is 20 MHz wide, and designated as the operating channel of the BSS. This channel may also be used by the STAs to establish a connection with the AP. The channel access in an IEEE 802.11 system may be Carrier Sense Multiple Access with Collision Avoidance (CSMA/CA). In this mode of operation, the STAs, including the AP, can sense the primary channel. If the channel is detected to be busy, the STA may back off. If the channel is detected to be free, the STA may acquire the channel and transmit data.

It is understood that network 300 can implement various wireless standards using different channel sizes (bandwidths), without departing from the technology. By way of example, IEEE 802.11n, High Throughput (HT) STAs may be used, e.g., implementing a 40 MHz communication channel. This can be achieved, for example, by combining a primary 20 MHz channel, with an adjacent 20 MHz channel to form a 40 MHz wide contiguous channel. In IEEE 802.11a/c, very high throughput (VHT) STAs can also be supported, e.g., 20 MHz, 40 MHz, 80 MHz, and/or 160 MHz wide channels. The 40 MHz, and 80 MHz, channels can be formed, e.g., by combining contiguous 20 MHz channels. A 160 MHz channel may be formed, for example, by combining eight contiguous 20 MHz channels, or by combining two non-contiguous 80 MHz channels (e.g., referred to as an 80+80 configuration).

In the event of a power outage, networks usually run on backup power. However, the network does not know that it is running on backup power, and continues to consume power normally. As a result, backup power is used up faster than is necessary.

In order to conserve battery power, current systems control power delivery from the UPS side. Specifically, a UPS can shut off power to devices coupled to the UPS through different ports of the UPS. More specifically, the UPS can conserve battery power by shutting off a port and therefore refraining from delivering power to all network devices coupled to the port. This port-by-port technique for conserving power is problematic as often times numerous network devices draw power through a single port. In particular network devices that are both critical and not critical to network environment operation can draw power through the same port. In turn, shutting off the port can lead to critical network devices failing to receive backup power.

The present includes systems, methods, and computer-readable mediums for controlling backup power consumption by network devices in a network environment. A backup power consumption plan for controlling power consumption by network devices of a network environment from an uninterruptible power supply (UPS) can be identified. The backup power consumption plan can be defined by an administrator of the network environment. Further, the backup power consumption plan can define one or more specific backup power up-times for one or more network devices of the network devices. An interruption of power delivery over a main power delivery channel to the network devices can be detected during operation of the network devices. Power consumption by the network device from the UPS can be controlled on a per-device basis according to the backup power consumption plan in response to detecting the interruption of power delivery over the main power delivery channel to the network devices.

FIG. 4 illustrates an example network environment 400 for controlling backup power consumption by network devices within the network environment 400. Specifically backup power consumption in the network environment 400 can be controlled to more conservatively use backup power when compared to standard network environments. In particular and as will be discussed in greater detail later, backup power consumption in the network environment 400 can be controlled on a per-device basis in order to more conservatively use backup power when compared to standard network environments.

The network environment 400 can be implemented with an applicable network environment for providing network services to clients. Specifically, the network environment 400 can be implemented with or as part of the environments shown in FIGs. 1-3. For example, the network environment 400 can be implemented as part of an applicable wireless environment, such as the wireless communication network 300 shown in FIG. 3, for providing wireless access to network services.

The example network environment 400 shown in FIG. 4 includes a first network device 402-1, a second network device 402-2, and a third network device 402-3 (network devices 402). The network devices 402 can function according to applicable devices for providing network service access through the network environment 400. For example, the network devices 402 can include switches for providing network service access through the network environment 400. Further, the network devices 402 can function according to applicable devices for providing wireless access to network services through the network environment 400. In particular, the network devices 402 can be access points that function according to an applicable wireless protocol, e.g. the IEEE 802.11 family of protocols, to provide clients wireless access to network services.

The example network environment 400 also includes a UPS 404 and a power management system 406. The UPS 404 functions to deliver backup power to the network devices 402. Specifically, the network devices 402 can be configured to receive power over a main power delivery channel during normal operation in the network environment 400. For example, the network devices 402 can receive power from Power over Ethernet serving as a main power delivery channel during normal operation in the network environment 400. As follows, the UPS 404 can deliver power to the network devices 402 in response to an interruption of power delivery over the main power delivery channel to the network devices 402. For example, the main power delivery channel is an AC inline power channel configured to deliver power to the network devices 402. Further in the example, if the AC inline power channel fails, then the UPS 404 can deliver power to the network devices 402 to facilitate continued operation of the network devices 402. In another example, if the main power delivery channel fails to delivery enough power to adequately power the network devices 402 in operation, e.g. a brownout, then the UPS 404 can deliver power to the network devices 402.

The network environment 400 can include other network devices, e.g. routers and switches, coupled between the network devices 402 and the UPS 404. For example, the network environment 400 can be formed by access points, implemented as the network devices 402, and routers and switches coupled between the UPS 404 and the network devices 402. In turn, the routers and switches coupled between the UPS 404 and the network devices 402 can deliver power, e.g. POE, to the network devices 402, from a main power channel and the UPS 404.

The UPS 404 can be an applicable power source for delivering power to the network devices 402 in operating in the network environment 400 when a main power delivery channel for the network devices 402 fails, e.g. through either a blackout or a brownout. Specifically, the UPS 404 can provide nearly instantaneous power to the network devices 402 in response to a failure of power delivery to the network devices 402 over a main power delivery channel of the network devices 402. For example the UPS 404 can include one or more batteries that are configured to provide power to the network devices 402 nearly instantaneously when a main power delivery channel of the network devices 402 fails.

The UPS 404 can be coupled to a main power delivery channel for the network devices 402. Specifically, the main power delivery channel of the network devices 402 can provide power to the UPS 404 during operation of the network devices 402. For example, batteries of the UPS 404 can be charged by an AC inline power channel that serves as a man power delivery channel for the network devices 402. Subsequently, when the main power delivery channel fails, the UPS 404 can supplement the main power delivery channel and provide power to the network devices 402. As will be discussed in greater detail later, the UPS 404 can detect that the main power delivery channel has failed in providing power to the network devices 402, e.g. through an AC inline power channel. Subsequently, the UPS 404 can deliver power to the network devices 402 in response to the main power delivery channel failing to transmit power to the network devices 402. Specifically, the UPS 404 can provide stored power received from the AC inline power channel to the network devices 402 in response to the AC inline power channel failing.

Network devices are typically connected to the UPS 404 in groups through specific ports that are grouped into banks. Specifically, network devices connected to the UPS 404 through a single bank can form a group of network devices. A single relay can control power delivery to each bank of network devices. As follows, the UPS 404 can deliver power to groups of network devices on a per-bank basis. For example, as shown in the example environment 400, the network devices 402 are all connected to a single bank of the UPS 404 through corresponding ports. In turn, the UPS 404 delivers backup power on a per-bank basis, thereby providing power to all of the network devices 402 as they are connected to the same port.

Delivering power on a per-bank basis presents challenges in selectively controlling how backup power is delivered and conserving backup power in the event of main power delivery channel failure, e.g. through a blackout or brownout. In particular, the UPS 404 can be configured to shut off specific banks and refrain from delivering power to groups of network devices within the specific banks. However, this is problematic as a network device in a shut off bank might be a critical device, e.g. a device that should receive backup power in the event of a main power channel failure. Specifically, the UPS 404 might shut off a bank and thereby fail to deliver backup power that is necessary for continued operation of the network environment 400. This creates the need for the ability to control power consumption from the UPS 404 on a per-device basis. Specifically, this creates the need for the ability to control power consumption from the perspective of the network devices 402, e.g. on the device side, as opposed to controlling power delivery from the UPS 404 from the perspective of the UPS 404, e.g. on the UPS side.

In typical network environments, switches and routers are directly connected to a UPS while other network equipment and devices coupled to the switches and routers are powered through Power over Ethernet provided through ports at the switches and routers. In turn, the network devices, e.g. access points, receive backup power from the UPS from the switches and routers and not directly from the UPS itself. The switches can be controlled to regulate backup power delivery to the network devices. Specifically, each network device can be coupled to a switch and/or router through a single corresponding port. As follows, each port at the switches and routers can be controlled on a per-port basis to individually control power consumption on a per-device basis of the corresponding network devices coupled to the switches and routers. For example, a port on a switch can be shut off to stop backup power consumption by a device coupled to the port, effectively controlling backup power consumption at the switch on a per-port/per-device basis.

The power management system 406 functions to control backup power consumption of the network devices 402. Specifically, the power management system 406 functions to control an amount of backup power consumed by the network devices 402 from the UPS 404 in the network environment 400. In controlling an amount of backup power consumed by the network devices 402, the power management system 406 can control operation of the network devices 402. For example and as will be discussed in greater detail later, the power management system 406 can configure the network devices 402 to operate in a low power mode, e.g. a mode that consumes less power than a normal operation mode of the network devices 402. By controlling operation of the network devices 402 to control an amount of consumed backup power, the power management system 406 can effectively control backup power consumption from the device side. This is opposed to typical power control which, as discussed previously, occurs from the UPS side through bank activation and deactivation at the UPS 404. Further, this is opposed to typical power control which directly controls power delivery from the UPS 404 and subsequently power consumption by the network devices 402, instead of controlling actual power consumption by the network devices 402 and subsequently power delivery from the UPS 404.

Further, in controlling backup power consumption by the network devices 402 from the UPS 404, the power management system 406 can control power delivery through network devices coupled between the UPS 404 and the network devices 402. For example, the power management system 406 can control switches and routers coupled between the UPS 404 and the network devices 402 to control backup power consumption by the network devices 402 according to a backup power consumption plan. Specifically, the power management system 406 can control corresponding ports used to couple the network devices 402 to a switch or router to control backup power delivery and corresponding power consumption by the network devices 402 according to backup power consumption plan. For example, if a backup power consumption plan specifies to turn off the first network device 402-1, e.g. the first network device 402-1 is a non-critical network device, then the power management system 406 can control a switch coupled to the network device 402-1 to stop providing POE to the network device 402-1. Specifically, the power management system 406 can shut off a port coupling the switch to the network device 402-1 in order to shut off backup power delivery to the network device 402-1.

By controlling operation of the network devices 402 to control an amount of backup power consumed by the network devices 402, the power management system 406 can control backup power consumption on a per-device basis. For example, the power management system 406 can turn off the first network device 402-1. Further in the example, the power management system 406 can leave the third network device 402-3 operating in a normal operation mode. By controlling power consumption on a per-device basis, the power management system 406 can solve the previously described problems associated with controlling power delivery on a per-bank basis from the UPS 404. Specifically, the power management system 406 can leave critical devices on, thereby helping to ensure that the critical devices remain operational for as long as possible when the network environment 400 is operating off of backup power.

The power management system 406 can be implemented locally within the network environment 400. For example, the power management system 406 can be implemented, at least in part, locally at the network devices 402. As follows, the power management system 406 can locally control operation of the network devices 402 from the network devices 402 to control backup power consumption. Further, the power management system 406 can be implemented, at least in part, locally at the UPS 404. As follows, the power management system 406 can locally control operation of the network devices 402 from the UPS 404 to control backup power consumption. Additionally, the power management system 406 can be implemented remote from the network environment 400. For example, the power management system 406 can be implemented in a cloud environment. As follows, the power management system 406 can remotely control operation of the network devices 402 from the cloud environment.

Further, the power management system 406 can control backup power consumption by the network devices 402 in response to a failure of a main power delivery channel in delivering power to the network devices 402. Specifically, the power management system 406 can control operation of the network devices 402 in consuming backup power, in response to the main power delivery channel failing to deliver power to the network devices 402. In various embodiments, the power management system 406 can actually detect that a main power delivery channel is failing to provide power to the network devices 402. Further, the UPS 404, e.g. the power management system 406 implemented at the UPS 404, can detect that a main power delivery channel is failing to deliver power to the network devices 402. Specifically, the UPS 404 can receive AC inline power from a main power delivery channel of the network devices 402 and detect when the main power delivery channel is no longer providing power to the UPS 404. The UPS 404 can then provide backup power to the network environment 400. In turn, the power management system 406 can control operation of the network devices 402 in consuming backup power in response to the UPS 404 detecting the failure of the main power delivery channel. For example, the UPS 404 can communicate to the power management system 406, e.g. a cloud-based power management system, that the main power delivery channel has failed. As follows, the power management system 406 can control, e.g. remotely, the operation of the network devices 402 in consuming backup power provided by the UPS 404.

The power management system 406 can control power consumption of the network devices 402 according to a backup power consumption plan. In particular, the power management system 406 can control power consumption of the network devices 402 according to a backup power consumption plan in response to an interruption of power delivery over a main power delivery channel to the network devices 402. A backup power consumption plan can indicate how to operate specific network devices in the network environment 400 when the network environment is operating using backup power, e.g. power provided by the UPS 404. Specifically, the power management system 406 can selectively control operation of the network devices 402 according to the backup power consumption plan, to control backup power consumption by the network devices 402. A backup power consumption plan, as will be described in greater detail later, can be defined by a user, e.g. an administrator, associated with the network environment 400. Accordingly, a network administrator can use a backup power consumption plan to effectively control power consumption within the network environment 400.

The backup power consumption plan can define specific backup power up-times for the network devices 402. A backup power up-time specifies an amount of time to keep a network device running in a specific operation mode using backup power before the network device is powered down, e.g. because the backup power has run out or the network device is selectively powered down. Specifically, a backup power up-time can specify an amount of time to keep a network device running in a normal operation mode before powering down the network device. The backup power up-times can be specific to each of the network devices 402. For example, a backup power up-time for the first network device 402-1 can be less than a backup power up-time for the second network device 402-2. In controlling operation of the network devices 402 according to backup power up-times, as indicated by the backup power consumption plan, the power management system 406 can allow the network devices 402 to continue operating using backup power for the specific backup power up-times for the network devices 402. Once the backup power up-times for the network devices 402 has passed, then the power management system 406 can power down the network devices 402.

Backup power up-times for the network devices 402 can be defined by a user/administrator associated with the network environment 400. For example, a user can be presented with a list of devices and functions of the devices in the network environment 400 and manually define power up-times for the devices using the list of devices. A user-defined power up-time for a network device can be a desired up-time for the network device. Alternatively, a user-defined power up-time for a network device can include a range of desired up-times for the network device. The power management system 406, using the techniques described herein, can ensure that the desired power up-time will be met or nearly met, even when additional network devices are added to the network environment 400. This can alleviate the need for administrators to upgrade the UPS 404 or purchase additional UPSs for the network environment 400 as devices are added to the network environment 400.

Further, the backup power consumption plan can define critical devices of the network devices 402. A critical network device, as used herein, is a device that should be allowed to consume backup power from the UPS 404 for as long as possible, e.g. as long as the UPS 404 can provide backup power. Specifically, a critical network device can include a network device that is necessary or essential to operation of the network environment 400 and should therefore continue to operate/consume backup power when the network environment 400 is operating off of backup power. A user can specify critical network devices in the network environment 400. For example, an administrator can be presented with a list of network devices in the network environment 400 and functions of the network devices in the network environment 400. Further in the example, the administrator can define the critical network devices in the network environment 400 using the list of network devices. In controlling operation of the defined critical devices, the power management system 406 can control the critical devices to continue operating when the network environment 400 is operating off of backup power. Specifically, the power management system 406 can allow the critical devices to continue to operate normally, and potentially for as long as possible, when the network environment 400 begins to run on backup power.

Additionally, the backup power consumption plan can define non-critical network devices of the network devices 402. A non-critical device, as used herein, is a device that should be powered off to refrain from consuming backup power from the UPS 404 when the UPS is providing backup power. Specifically, a non-critical network device can include a network device that is not necessary or essential to operation of the network environment 400 and should therefore refrain from operating/consuming backup power when the network environment 400 is operating off of backup power. A user can specify non-critical network devices in the network environment 400. For example, an administrator can be presented with a list of network devices in the network environment 400 and functions of the network devices in the network environment 400. Further in the example, the administrator can define the non-critical network devices in the network environment 400 using the list of network devices. In controlling operation of the defined non-critical devices, the power management system 406 can power down the non-critical devices when the network environment 400 is operating off of backup power.

The backup power consumption plan can define dynamic power network devices of the network devices 402. A dynamic power network device, as used herein, is a network device that can be configured to operate in a different mode, e.g. a low power mode, from a normal operation mode of the network device. Specifically, a dynamic power network device can be configured to operate in a low power mode instead of a normal power mode when the network environment 400 is operating off of backup power. A low power mode can include a mode of operation of a network device that consumes less power than a normal operation mode of the network device. Further, a low power mode of a network device can be defined by characteristics of operation of a network device functioning in the low power mode. For example, a low power mode can be achieved by turning off certain features of a network device, i.e. characteristics of operation of the low power mode. In controlling operation of the defined dynamic power network devices, the power management system 406 can reconfigure the devices to switch from operating in a normal mode to a low power mode. Specifically, the power management system 406 can reconfigure the devices to operate in a low power mode when the network environment 400 is operating off of backup power.

Dynamic power network devices of the network devices 402 can be defined by a user/administrator of the network environment 400. For example, an administrator can be presented with a list of network devices in the network environment 400 and functions of the network devices in the network environment 400. Further in the example, the administrator can define the dynamic power network devices in the network environment 400 using the list of network devices. Further, characteristics of operation of the dynamic power network device, e.g. characteristics of operation of a low power mode of the dynamic power network device, can be defined by a user/administrator of the network environment 400. For example, an administrator can identify specific functions of the dynamic power network device to disable when the dynamic power network device is configured to operate in the low power mode.

The power management system 406 can automatically define dynamic power network devices in the network environment 400, critical and non-critical devices in the network environment 400, and power up-times for network devices in the network environment 400. Further, the power management system 406 can automatically define characteristics of operation of a low power mode for a dynamic power network device. The power management system 406 can define dynamic power network devices, critical and non-critical network devices, power up-times for network devices and characteristics of operation of a low power mode automatically based on operation of the network devices 402 to provide network service access. For example, if the first network device 402-1 is operating to provide network service access to a large number of clients, then the power management system 406 can tag the device as a critical network device. In another example, if the second network device 402-2 is not using a specific port to provide network service access, then the power management system 406 can specify powering down the port for operation of the second network device 402-2 in a low power mode.

The power management system 406 can gather and/or generate power analytics of devices in the network environment 400. Power analytics can include applicable power characteristics of devices operating in the network environment 400. Specifically, power analytics can include an amount of power consumed by each network device and an amount of power consumed by each component and function of the network device. Power analytics can be gathered from either or both the UPS 404 and switches and routers coupled between the UPS 404 and the network device devices 402. Further power analytics can be specific to the location where the power analytics are generated. Specifically, power analytics can specify power consumed by/power delivered to the switches and routers coupled between the UPS 404 and the network devices 402 when the power analytics are gathered from the UPS 404. Further, power analytics can specify power consumed by/delivered to the network devices 402 through corresponding ports on the switches and routers when the power analytics are gathered from the switches and routers between the network devices 402 and the UPS 404. Power analytics can be generated in real time. Subsequently, the power analytics can be presented to a user/administrator in real time. Power analytics can be generated/gathered based on operation of the network environment 400 from power delivered through the main power delivery channel. For example power analytics can be generated based on normal operation of the network devices 402 in the network environment 400 using power delivery through the main power delivery channel to the network devices 402, e.g. through routers and switches.

The power management system 406 can present the power analytics to a user through an interface, e.g. a dashboard. The user can then utilize the power analytics to define/modify a backup power consumption plan for the network environment 400. For example, the power management system 406 can present a list of current power up-times for network devices, e.g. as part of power analytics, to a user and an amount of power each network device is using in operation. The user can then modify the power up-times for the network devices using the list of current power up-times and the amount of power each network device consumes in operation. Further in the example, the user can identify devices as critical or non-critical devices based on the current power up-times for the network devices.

When the power management system 406 is implemented remote from the network devices 402, the power management system 406 can provide instructions to the network devices 402 for consuming backup power. Specifically, the power management system 406 can send backup power consumption instructions to the network devices 402 for controlling backup power consumption. Subsequently, when the network environment 400 begins consuming backup power from the UPS 404, the network devices 402 can use the backup power consumption instructions to operate according to the backup power consumption instructions, e.g. according to a backup power consumption plan. The power management system 406 can generate the backup power consumption instructions according to a backup power consumption plan. For example, if a backup power consumption plan indicates that a device should operate as a critical device, then the power management system 406 can generate instructions that direct the network device to continue consuming power in a normal operation mode during backup power operation.

FIG. 5 illustrates a flowchart for an example method of controlling backup power consumption by network devices in a network environment. The method shown in FIG. 5 is provided by way of example, as there are a variety of ways to carry out the method. Additionally, while the example method is illustrated with a particular order of steps, those of ordinary skill in the art will appreciate that FIG. 5 and the modules shown therein can be executed in any order and can include fewer or more modules than illustrated.

Each module shown in FIG. 5 represents one or more steps, processes, methods or routines in the method. For the sake of clarity and explanation purposes, the modules in FIG. 5 are described with reference to the environment 400 shown in FIG. 4.

At step 500, the power management system 406 identifies a backup power consumption plan for controlling power consumption by the network devices 402 in the network environment 400. The power management system 406 can identify the backup power consumption plan based on input received from an administrator of the network environment 400. Specifically, the power management system 406 can present power analytics to the administrator who can provide input based on the power analytics. As follows, the power management system 406 can identify the backup power consumption plan using the administrator input generated based on the power analytics. Further, the power management system 406 can identify the backup power consumption plan automatically, e.g. without input from an administrator. Specifically, the power management system 406 can identify the backup power consumption plan automatically based on operation of the network devices in the network environment.

At step 502, an interruption of power delivery over a main power delivery channel to the network devices 402 is detected. The interruption of power delivery can be detected by the UPS 404. Further, the interruption of power delivery can be detected by the power management system 406. For example, the UPS 404 can send a message to the power management system 406 indicating that the UPS 404 is no longer receiving inline power over the main power delivery channel. As follows, the power management system 406 can detect the interruption of power delivery over the main power delivery channel in response to the message received from the UPS 404.

At step 504, the power management system 406 selectively controls power consumption by the network devices 402 from the UPS 404 on a per-device basis according to the backup power consumption plan. Specifically, the power management system 406 can selectively control power consumption of the network devices 402 on a per-device basis in response to detecting the interruption of power delivery over the main power delivery channel to the network devices 402. In selectively controlling power consumption by the network devices 402, the power management system 406 can control operation of the network devices 402 in the network environment 400. For example, the power management system 406 can cause the network devices 402 to turn off, begin operating in a low power mode, or continue operating in a normal operation mode.

The disclosure now turns to FIGs. 6 and 7, which illustrate example network devices and computing devices, such as switches, routers, load balancers, client devices, and so forth.

FIG. 6 illustrates a computing system architecture 600 wherein the components of the system are in electrical communication with each other using a connection 605, such as a bus. Exemplary system 600 includes a processing unit (CPU or processor) 610 and a system connection 605 that couples various system components including the system memory 615, such as read only memory (ROM) 620 and random access memory (RAM) 625, to the processor 610. The system 600 can include a cache of high-speed memory connected directly with, in close proximity to, or integrated as part of the processor 610. The system 600 can copy data from the memory 615 and/or the storage device 630 to the cache 612 for quick access by the processor 610. In this way, the cache can provide a performance boost that avoids processor 610 delays while waiting for data. These and other modules can control or be configured to control the processor 610 to perform various actions. Other system memory 615 may be available for use as well. The memory 615 can include multiple different types of memory with different performance characteristics. The processor 610 can include any general purpose processor and a hardware or software service, such as service 1 632, service 2 634, and service 3 636 stored in storage device 630, configured to control the processor 610 as well as a special-purpose processor where software instructions are incorporated into the actual processor design. The processor 610 may be a completely self-contained computing system, containing multiple cores or processors, a bus, memory controller, cache, etc. A multi-core processor may be symmetric or asymmetric.

To enable user interaction with the computing device 600, an input device 645 can represent any number of input mechanisms, such as a microphone for speech, a touch-sensitive screen for gesture or graphical input, keyboard, mouse, motion input, speech and so forth. An output device 635 can also be one or more of a number of output mechanisms known to those of skill in the art. In some instances, multimodal systems can enable a user to provide multiple types of input to communicate with the computing device 600. The communications interface 640 can generally govern and manage the user input and system output. There is no restriction on operating on any particular hardware arrangement and therefore the basic features here may easily be substituted for improved hardware or firmware arrangements as they are developed.

Storage device 630 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 625, read only memory (ROM) 620, and hybrids thereof.

The storage device 630 can include services 632, 634, 636 for controlling the processor 610. Other hardware or software modules are contemplated. The storage device 630 can be connected to the system connection 605. In one aspect, a hardware module that performs a particular function can include the software component stored in a computer-readable medium in connection with the necessary hardware components, such as the processor 610, connection 605, output device 635, and so forth, to carry out the function.

FIG. 7 illustrates an example network device 700 suitable for performing switching, routing, load balancing, and other networking operations. Network device 700 includes a central processing unit (CPU) 704, interfaces 702, and a bus 710 (e.g., a PCI bus). When acting under the control of appropriate software or firmware, the CPU 704 is responsible for executing packet management, error detection, and/or routing functions. The CPU 704 preferably accomplishes all these functions under the control of software including an operating system and any appropriate applications software. CPU 704 may include one or more processors 708, such as a processor from the INTEL X86 family of microprocessors. In some cases, processor 708 can be specially designed hardware for controlling the operations of network device 700. In some cases, a memory 706 (e.g., non-volatile RAM, ROM, etc.) also forms part of CPU 704. However, there are many different ways in which memory could be coupled to the system.

The interfaces 702 are typically provided as modular interface cards (sometimes referred to as "line cards"). Generally, they control the sending and receiving of data packets over the network and sometimes support other peripherals used with the network device 700. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the master CPU 704 to efficiently perform routing computations, network diagnostics, security functions, etc.

Although the system shown in FIG. 7 is one specific network device of the present technology, it is by no means the only network device architecture on which the present technology can be implemented. For example, an architecture having a single processor that handles communications as well as routing computations, etc., is often used. Further, other types of interfaces and media could also be used with the network device 700.

Regardless of the network device's configuration, it may employ one or more memories or memory modules (including memory 706) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 706 could also hold various software containers and virtualized execution environments and data.

The network device 700 can also include an application-specific integrated circuit (ASIC), which can be configured to perform routing and/or switching operations. The ASIC can communicate with other components in the network device 700 via the bus 710, to exchange data and signals and coordinate various types of operations by the network device 700, such as routing, switching, and/or data storage operations, for example.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like and there is provided computer-readable storage devices, mediums, and memories carrying instructions for execution by one or more processors so as to cause the pone or more processors to bring about performance of any of the methods described herein. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

## Claims

1. A method comprising:
identifying a backup power consumption plan for controlling power consumption by network devices of a network environment (400) from an uninterruptible power supply, UPS, (404) of the network environment (400);
detecting an interruption of power delivery over a main power delivery channel to the network devices (402-1, 402-2, 402-3) during operation of the network devices (402-1, 402-2, 402-3); and
selectively controlling power consumption by the network devices (402-1, 402-2, 402-3) from the UPS (404) on a per-device basis according to the backup power consumption plan in response to detecting the interruption of power delivery over the main power delivery channel to the network devices (402-1, 402-2, 402-3),
the method further comprising controlling power consumption by the network devices (402-1, 402-2, 402-3) from the UPS (404) by controlling power delivery through ports of one or more switches and/or routers coupled between the network devices (402-1, 402-2, 402-3) and the UPS (404) on a per-port basis.

2. The method of claim 1, wherein the backup power consumption plan defines one or more specific backup power up-times for one or more network devices (402-1, 402-2, 402-3) of the network devices (402-1, 402-2, 402-3).

3. The method of any preceding claim, wherein the backup power consumption plan defines one or more critical network devices (402-1, 402-2, 402-3) of the network devices (402-1, 402-2, 402-3) to continue to consume power from the UPS (404) while the UPS (404) still has power.

4. The method of any preceding claim, wherein the backup power consumption plan defines one or more non-critical network devices (402-1, 402-2, 402-3) of the network devices (402-1, 402-2, 402-3) to power down and refrain from consuming power from the UPS (404).

5. The method of any preceding claim, wherein the backup power consumption plan defines one or more dynamic power network devices (402-1, 402-2, 402-3) of the network devices (402-1, 402-2, 402-3) to operate in a low power mode and consume less power from the UPS than when the one or more dynamic power network devices are operating normally in the network environment.

6. The method of claim 5, wherein the one or more dynamic power network devices (402-1, 402-2, 402-3) and characteristics of operation of the low power mode are defined by a network administrator associated with the network environment (400).

7. The method of claim 5, wherein the one or more dynamic power network devices (402-1, 402-2, 402-3) and characteristics of operation of the low power mode are automatically defined based on operation of the one or more dynamic power network devices (402-1, 402-2, 402-3) within the network environment (400) to provide network service access.

8. The method of any preceding claim, further comprising:
gathering power analytics for the network devices (402-1, 402-2, 402-3) in operation within the network environment to provide network service access; and
presenting the power analytics to an administrator associated with the network
environment for defining, at least in part by the administrator, the backup power consumption plan, optionally wherein the power analytics are gathered for the network devices (402-1, 402-2, 402-3) during operation of the network devices (402-1, 402-2, 402-3) within the network environment (400) to provide network service access while receiving power over the main power delivery channel.

9. The method of any preceding claim, wherein the power consumption of the network devices (402-1, 402-2, 402-3) is controlled according to the backup power consumption plan locally through the UPS (404).

10. The method of any of claims 1 to 8, wherein the power consumption of the network devices (402-1, 402-2, 402-3) is remotely controlled according to the backup power consumption plan through a remote power management system.

11. The method of any preceding claim, wherein the main power delivery channel is an AC inline power channel and the interruption of power delivery over the main power delivery channel is detected by the UPS (404) in response to the UPS (404) failing to receive AC inline power through the AC inline power channel or the main power delivery channel failing to provide enough power to power the network devices (402-1, 402-2, 402-3) during operation of the network devices (402-1, 402-2, 402-3).

12. The method of any preceding claim, wherein selectively controlling power consumption by the network devices (402-1, 402-2, 402-3) from the UPS (404) further comprises sending corresponding backup power consumption instructions generated according to the backup power consumption plan, and wherein the network devices (402-1, 402-2, 402-3) are configured to implement the corresponding backup power consumption instructions to operate according to the backup power consumption plan.

13. The method of any preceding claim, wherein selectively controlling the power consumption by the network devices (402-1, 402-2, 402-3) comprises reconfiguring at least one of the network devices (402-1, 402-2, 402-3) to switch from operating in a normal mode to operating in a low power mode that consumes less power than the normal mode.

14. A system comprising:
one or more processors; and
at least one computer-readable storage medium having stored therein instructions which, when executed by the one or more processors, cause the one or more processors to perform the method of any preceding claim.

15. A non-transitory computer-readable storage medium having stored therein instructions which, when executed by a processor, cause the processor to perform the method of any of claims 1 to 13.

## Patentansprüche

1. Ein Verfahren, aufweisend:
Identifizieren eines Backup-Stromverbrauchsplans zur Steuerung des Stromverbrauchs von Netzwerkgeräten einer Netzwerkumgebung (400) aus einer unterbrechungsfreien Stromversorgung, UPS, (404) der Netzwerkumgebung (400);
Erkennen einer Unterbrechung der Stromzufuhr über einen Hauptstromzufuhrkanal zu den Netzwerkgeräten (402-1, 402-2, 402-3) während des Betriebs der Netzwerkgeräte (402-1, 402-2, 402-3); und
Selektives Steuern des Stromverbrauchs der Netzwerkgeräte (402-1, 402-2, 402-3) aus der UPS (404) geräteweise gemäß dem Backup-Stromverbrauchsplan als Reaktion auf das Erkennen der Unterbrechung der Stromzufuhr über den Hauptstromzufuhrkanal zu den Netzwerkgeräten (402-1, 402-2, 402-3),
das Verfahren ferner aufweisend, dass der Stromverbrauch der Netzwerkgeräte (402-1, 402-2, 402-3) aus der UPS (404) durch das Steuern der Stromzufuhr über Ports eines oder mehrerer Switches und/oder Router, die zwischen den Netzwerkgeräten (402-1, 402-2, 402-3) und der UPS (404) gekoppelt sind, portweise gesteuert wird.

2. Das Verfahren nach Anspruch 1, wobei der Backup-Stromverbrauchsplan ein oder mehrere spezifische Backup-Betriebszeiten für ein oder mehrere Netzwerkgeräte (402-1, 402-2, 402-3) der Netzwerkgeräte (402-1, 402-2, 402-3) definiert.

3. Das Verfahren nach einem der vorhergehenden Ansprüchen, wobei der Backup-Stromverbrauchsplan ein oder mehrere kritische Netzwerkgeräte (402-1, 402-2, 402-3) der Netzwerkgeräte (402-1, 402-2, 402-3) definiert, die weiter Strom aus der UPS (404) verbrauchen, während die UPS (404) noch Strom aufweist.

4. Das Verfahren nach einem der vorhergehenden Ansprüche, wobei der Backup-Stromverbrauchsplan ein oder mehrere nicht-kritische Netzwerkgeräte (402-1, 402-2, 402-3) der Netzwerkgeräte (402-1, 402-2, 402-3) definiert, die abgeschaltet werden und keinen Strom aus der UPS (404) verbrauchen.

5. Das Verfahren nach einem der vorhergehenden Ansprüche, wobei der Backup-Stromverbrauchsplan ein oder mehrere dynamische Leistungs-Netzwerkgeräte (402-1, 402-2, 402-3) der Netzwerkgeräte (402-1, 402-2, 402-3) definiert, die in einem Niedrigstrommodus betrieben werden und weniger Strom aus der UPS verbrauchen als beim normalen Betrieb in der Netzwerkumgebung.

6. Das Verfahren nach Anspruch 5, wobei das eine oder die mehreren dynamischen Leistungs-Netzwerkgeräte (402-1, 402-2, 402-3) und die Betriebsmerkmale des Niedrigstrommodus von einem mit der Netzwerkumgebung (400) assoziierten Netzwerkadministrator festgelegt werden.

7. Das Verfahren nach Anspruch 5, wobei das eine oder die mehreren dynamischen Leistungs-Netzwerkgeräte (402-1, 402-2, 402-3) und die Betriebsmerkmale des Niedrigstrommodus automatisch basierend auf dem Betrieb des bzw. der dynamischen Leistungs-Netzwerkgeräte (402-1, 402-2, 402-3) innerhalb der Netzwerkumgebung (400) zur Bereitstellung des Zugriffs auf Netzwerkdienste festgelegt werden.

8. Das Verfahren nach einem beliebigen vorhergehenden Anspruch, ferner aufweisend:
Erfassen von Stromverbrauchsanalysen für die Netzwerkgeräte (402-1, 402-2, 402-3) im Betrieb innerhalb der Netzwerkumgebung zur Bereitstellung des Zugriffs auf Netzwerkdienste; und
Präsentieren der Stromverbrauchsanalysen an einen Administrator, der mit der Netzwerkumgebung assoziiert ist, zum Festlegen des Backup-Stromverbrauchsplans zumindest teilweise durch den Administrator, wahlweise wobei die Stromverbrauchsanalysen für die Netzwerkgeräte (402-1, 402-2, 402-3) während des Betriebs der Netzwerkgeräte (402-1, 402-2, 402-3) innerhalb der Netzwerkumgebung (400) zur Bereitstellung des Zugriffs auf Netzwerkdienste erfasst werden, während sie Strom über den Hauptstromzufuhrkanal beziehen.

9. Das Verfahren nach einem beliebigen vorhergehenden Anspruch, wobei der Stromverbrauch der Netzwerkgeräte (402-1, 402-2, 402-3) lokal über die UPS (404) gemäß dem Backup-Stromverbrauchsplan gesteuert wird.

10. Das Verfahren nach einem der Ansprüche 1 bis 8, wobei der Stromverbrauch der Netzwerkgeräte (402-1, 402-2, 402-3) gemäß dem Backup-Stromverbrauchsplan über ein Remote-Stromverwaltungssystem ferngesteuert wird.

11. Das Verfahren nach einem der vorhergehenden Ansprüche, wobei der Hauptstromzufuhrkanal ein AC-Inline-Stromkanal ist und die Unterbrechung der Stromzufuhr über den Hauptstromzufuhrkanal von der UPS (404) erkannt wird, indem die UPS (404) kein AC-Inline-Stromsignal über den AC-Inline-Stromkanal erhält oder der Hauptstromzufuhrkanal während des Betriebs der Netzwerkgeräte (402-1, 402-2, 402-3) nicht genügend Strom zur Versorgung der Netzwerkgeräte (402-1, 402-2, 402-3) aufweist.

12. Das Verfahren nach einem der vorhergehenden Ansprüche, wobei das selektive Steuern des Stromverbrauchs der Netzwerkgeräte (402-1, 402-2, 402-3) aus der UPS (404) ferner das Senden entsprechender Backup-Stromverbrauchsanweisungen umfasst, die gemäß dem Backup-Stromverbrauchsplan erzeugt werden, und wobei die Netzwerkgeräte (402-1, 402-2, 402-3) dafür konfiguriert sind, die entsprechenden Backup-Stromverbrauchsanweisungen umzusetzen, um gemäß dem Backup-Stromverbrauchsplan zu arbeiten.

13. Das Verfahren nach einem der vorhergehenden Ansprüche, wobei das selektive Steuern des Stromverbrauchs der Netzwerkgeräte (402-1, 402-2, 402-3) das Rekonfigurieren mindestens eines der Netzwerkgeräte (402-1, 402-2, 402-3) aufweist, um vom Betrieb in einem Normalmodus zum Betrieb in einem Niedrigstrommodus zu wechseln, der weniger Strom als der Normalmodus verbraucht.

14. Ein System, aufweisend:
einen oder mehrere Prozessoren; und
mindestens ein computerlesbares Speichermedium, in dem Anweisungen gespeichert sind, die, wenn sie von dem einen oder den mehreren Prozessoren ausgeführt werden, veranlassen, dass der eine oder die mehreren Prozessoren das Verfahren nach einem beliebigen vorhergehenden Anspruch ausführen.

15. Ein nicht-flüchtiges computerlesbares Speichermedium, in dem Anweisungen gespeichert sind, die, wenn sie von einem Prozessor ausgeführt werden, bewirken, dass der Prozessor das Verfahren nach einem der Ansprüche 1 bis 13 ausführt.

## Revendications

1. Procédé comprenant le fait :
d'identifier un plan de consommation d'énergie de secours pour contrôler la consommation d'énergie par des périphériques réseau d'un environnement réseau (400), à partir d'une alimentation électrique sans coupure, UPS, (404) de l'environnement réseau (400) ;
de détecter une interruption de la distribution d'énergie qui est fournie, sur un canal de distribution d'énergie principal, aux périphériques réseau (402-1, 402-2, 402-3) au cours du fonctionnement des périphériques réseau (402-1, 402-2, 402-3) ; et
de contrôler de manière sélective la consommation d'énergie par les périphériques réseau (402-1, 402-2, 402-3) à partir de l'UPS (404), sur une base par périphérique selon le plan de consommation d'énergie de secours, en réponse à la détection de l'interruption de la distribution d'énergie fournie, sur le canal de distribution d'énergie principal, aux périphériques réseau (402-1, 402-2, 402-3),
le procédé comprenant en outre le contrôle de la consommation d'énergie par les périphériques réseau (402-1, 402-2, 402-3) à partir de l'UPS (404), en contrôlant la distribution d'énergie passant à travers les ports d'un ou de plusieurs commutateurs et/ou routeurs couplés, sur une base par port, entre les périphériques réseau (402-1, 402-2, 402-3) et l'UPS (404).

2. Procédé selon la revendication 1, dans lequel le plan de consommation d'énergie de secours définit un ou plusieurs temps spécifiques de bon fonctionnement de l'énergie de secours pour un ou plusieurs périphériques réseau (402-1, 402-2, 402-3) parmi les périphériques réseau (402-1, 402-2, 402-3).

3. Procédé selon l'une des revendications précédentes, dans lequel le plan de consommation d'énergie de secours définit un ou plusieurs périphériques réseau critiques (402-1, 402-2, 402-3) parmi les périphériques réseau (402-1, 402-2, 402-3), pour continuer à consommer de l'énergie provenant de l'UPS (404), pendant que l'UPS (404) a encore de l'énergie.

4. Procédé selon l'une quelconque des revendications précédentes, dans lequel le plan de consommation d'énergie de secours définit un ou plusieurs périphériques réseau non critiques (402-1, 402-2, 402-3) parmi les périphériques réseau (402-1, 402-2, 402-3), pour qu'ils s'éteignent et qu'ils évitent de consommer de l'énergie provenant de l'UPS (404).

5. Procédé selon l'une quelconque des revendications précédentes, dans lequel le plan de consommation d'énergie de secours définit un ou plusieurs périphériques réseau d'énergie dynamique (402-1, 402-2, 402-3) parmi les périphériques réseau (402-1, 402-2, 402-3), pour qu'ils fonctionnent en mode basse énergie et qu'ils consomment moins d'énergie provenant de l'UPS (404) que lorsque le ou les périphériques réseau d'énergie dynamique fonctionnent normalement dans l'environnement réseau.

6. Procédé selon la revendication 5, dans lequel le ou les périphériques réseau d'énergie dynamique (402-1, 402-2, 402-3) et les caractéristiques du fonctionnement en mode basse énergie sont définis par un administrateur réseau associé à l'environnement réseau (400).

7. Procédé selon la revendication 5, dans lequel le ou les périphériques réseau d'énergie dynamique (402-1, 402-2, 402-3) et les caractéristiques du fonctionnement en mode basse énergie sont définis automatiquement, en se basant sur le fonctionnement du ou des périphériques réseau d'énergie dynamique (402 1, 402-2, 402-3) dans l'environnement réseau (400), afin de fournir un accès au service réseau.

8. Procédé selon l'une quelconque des revendications précédentes, comprenant en outre le fait :
de collecter des analyses de puissance pour les périphériques réseau (402-1, 402-2, 402-3) qui fonctionnent dans l'environnement réseau, afin de fournir un accès au service réseau ; et
de présenter les analyses de puissance à un administrateur associé à l'environnement réseau, pour définir au moins en partie, par l'administrateur, le plan de consommation d'énergie de secours, éventuellement procédé dans lequel les analyses de puissance sont collectées pour les périphériques réseau (402-1, 402-2, 402-3) au cours du fonctionnement des périphériques réseau (402-1, 402-2, 402-3) dans l'environnement réseau (400), afin de fournir un accès au service réseau, tout en recevant une alimentation en énergie sur le canal de distribution d'énergie principal.

9. Procédé selon l'une quelconque des revendications précédentes, dans lequel la consommation d'énergie des périphériques réseau (402-1, 402-2, 402-3) est contrôlée, localement, selon le plan de consommation d'énergie de secours via l'UPS (404).

10. Procédé selon l'une quelconque des revendications 1 à 8, dans lequel la consommation d'énergie des périphériques réseau (402-1, 402-2, 402-3) est contrôlée à distance selon le plan de consommation d'énergie de secours via un système de gestion d'énergie à distance.

11. Procédé selon l'une quelconque des revendications précédentes, dans lequel le canal de distribution d'énergie principal est un canal d'alimentation en ligne CA, et l'interruption de la distribution d'énergie sur le canal de distribution d'énergie principal est détectée par l'UPS (404), en réponse au fait que l'UPS (404) ne parvient pas à recevoir d'alimentation en ligne CA via le canal d'alimentation en ligne CA, ou bien au fait que le canal de distribution d'énergie principal ne parvient pas à fournir suffisamment d'énergie pour alimenter les périphériques réseau (402-1, 402-2, 402-3) au cours du fonctionnement des périphériques réseau (402-1, 402-2, 402-3).

12. Procédé selon l'une quelconque des revendications précédentes, dans lequel le fait de contrôler de manière sélective la consommation d'énergie par les périphériques réseau (402-1, 402-2, 402-3), à partir de l'UPS (404), comprend en outre l'envoi d'instructions de consommation d'énergie de secours correspondantes, lesdites instructions étant générées selon le plan de consommation d'énergie de secours, et procédé dans lequel les périphériques réseaux (402-1, 402-2, 402-3) sont configurés pour mettre en œuvre les instructions de consommation d'énergie de secours correspondantes, afin de fonctionner selon le plan de consommation d'énergie de secours.

13. Procédé selon l'une quelconque des revendications précédentes, dans lequel le fait de contrôler de manière sélective la consommation d'énergie par les périphériques réseau (402-1, 402-2, 402-3) comprend la reconfiguration d'au moins un des périphériques réseau (402-1, 402-2, 402-3), afin de passer d'un fonctionnement en mode normal à un fonctionnement en mode basse énergie qui consomme moins d'énergie que le mode normal.

14. système comprenant :
un ou plusieurs processeurs ; et
au moins un support de stockage lisible par ordinateur, ledit support contenant des instructions qui y sont stockées et qui, lorsqu'elles sont exécutées par le ou les processeurs, amènent le ou les processeurs à mettre en œuvre le procédé selon l'une quelconque des revendications précédentes.

15. support de stockage non transitoire, lisible par ordinateur, ledit support contenant des instructions qui y sont stockées et qui, lorsqu'elles sont exécutées par un processeur, amènent le processeur à mettre en œuvre le procédé selon l'une quelconque des revendications 1 à 13.
